# EUROPÄISCHE PATENTSCHRIFT

(11) **EP 1 498 997 B1**
(45) Veröffentlichungstag und Bekanntmachung des Hinweises auf die Patenterteilung: **17.10.2012**
(21) Anmeldenummer: 04016355.2
(22) Anmeldetag: 12.07.2004
(51) Int. Cl.: B63G 8/08, B63H 21/17, B63H 23/24

(54) **Schiffs-Energieversorgungs-und-verteilungsanlage**
Power supply and distribution for a ship
Dispositif d'alimentation et distribution pour un bateau

(30) Priorität: 14.07.2003 DE 10331823
(43) Veröffentlichungstag der Anmeldung: 19.01.2005
(73) Patentinhaber: SIEMENS AKTIENGESELLSCHAFT, 80333 München (DE)
(72) Erfinder: Ahlf, Gerd, 91369 Wiesenthau (DE)

(56) Entgegenhaltungen:
- EP-A2- 0 902 518
- DE-A1- 1 807 253

## Beschreibung

Die Erfindung betrifft eine Schiffs-Energieversorgungs- und - verteilungsanlage gemäß Oberbegriff des Patentanspruchs 1; eine derartige Anlage ist z.B. durch die WO 02/15361 A1 bekannt.

Schiffs-Energieversorgungs- und -verteilungsanlagen sind, insbesondere in Unterwasserschiffen, meist als Niederspannungsnetze mit hohen Betriebsspannungen bzw. Potentialen bis DC 1200 V ausgebildet. Sie weisen zumindest einen, teilweise auch mehrere Energieerzeuger wie z.B. Generatoren, Batterien, ggf. Brennstoffzellen auf, die verschiedene Verbraucher wie z.B. Fahrmotoren oder ein Bordnetz zur Speisung von Hilfsantrieben mit Energie versorgen. Die Energieerzeuger und die Energieverbraucher sind über Schutz- und Schaltorgane miteinander verbunden, die zum einen ein betriebliches Zu- oder Abschalten (z.B. zur Einstellung verschiedener Fahrschaltungen) von einzelnen Energieverbraucher, einzelnen Energieerzeuger oder bestimmten Teilen der Energieversorgungs- und Verteilungsanlage und zum anderen im Fehlerfall, insbesondere im Fall eines Kurzschlusses, ein Abschalten einzelner Energieverbraucher oder Energieerzeuger bis hin zu ganzen Teilen der Energieversorgungs- und Verteilungsanlage ermöglichen sollen.

Insbesondere Energieversorgungs- und Verteilungsanlagen von Unterwasserschiffen sind zur Verbesserung des Betriebsverhaltens, zur Erhöhung der Spannungsstabilität und zur Verringerung von Netzrückwirkungen sehr niederimpedant ausgelegt. Entsprechend sind in solchen Anlagen sehr hohe, energiereiche und verhältnismäßig lang anhaltende Teil- und Summenkurzschlussströme bis über 300 kA möglich, wobei wesentliche Quellen für diese Kurzschlussströme die Batterien und die Generatoren sind. An die Schutz- und Schaltorgane in diesen Anlagen werden deshalb besonders hohe Anforderungen gestellt.

Als Schutz- und Schaltorgane können spezielle, die vorstehend geschilderten Anforderungen erfüllende und zudem aufgrund der in Schiffen vorliegenden beengten Platzverhältnisse auch eine möglichst kleine Baugröße aufweisende Leistungsschalter mit Überstromauslösern verwendet werden.

Im Kurzschlussfall kommt es allerdings bei entsprechend hohen Kurzschlussströmen durch ein Ansprechen der Überstromauslöser einer Vielzahl von Leistungsschalter in der Schiffs-Energieversorgungs- und Verteilungsanlage zu einer Trennung einer Vielzahl von Energieerzeugern und -verbrauchern von der Anlage, und zwar nicht nur vom Kurzschluss betroffener Komponenten, sondern auch fehlerfreier Komponenten. Die von der Anlage getrennten Energieerzeuger und -verbraucher müssen nach einem sollen Kurzschlussfall erst wieder hochlaufen, wobei das Schiff nur bedingt oder gar nicht manövrierfähig ist. Dies stellt insbesondere für die Einsatzfähigkeit von Marineschiffen ein großes Problem dar.

DE 1807253 offenbart eine selektive Schutzschaltung für elektrische Netze mit Leistungsschaltern, deren Ausschaltspulen abhängig sind von Überstromauslösern und diesen nachgeschalteten Zeitstufen mit nach dem Einbauort der Leistungsschalter gestaffelten Verzögerungszeiten zur Verzögerung des Ausschaltkommandos.

Es ist Aufgabe der vorliegenden Erfindung, mit geringem Aufwand und Platzbedarf die Verfügbarkeit und Ausfallsicherheit einer Schiffs-Energieversorgungs- und Verteilungsanlage der vorgenannten Art im Kurzschlussfall zu erhöhen.

Die Lösung dieser Aufgabe gelingt erfindungsgemäß durch die Lehre des Patentanspruchs 1. Vorteilhafte Ausgestaltungen sind jeweils Gegenstand der Unteransprüche.

Ein unverzögerter Überstromauslöser spricht bei gleichem Kurzschlusstrom schneller an als ein zeitverzögerter Überstromauslöser, mit der Folge, dass ein Leistungsschalter mit unverzögertem Überstromauslöser frühzeitiger abschaltet als ein Leistungsschalter mit zeitverzögertem Überstromauslöser. Da erfindungsgemäß sowohl Leistungsschalter mit unverzögerten Überstromauslösern als auch Leistungsschalter mit zeitverzögerten Überstromauslösern in der Schiffs-Energieversorgungs- und Verteilungsanlage vorgesehen werden, kann somit im Kurzschlussfall eine Zeitstaffelung bei der Abschaltung einzelner Komponenten oder Teilen der Anlage erzielt werden. Es können somit selektiv bestimmte Komponenten oder Anlagenteile, z.B. die dem Kurzschluss- oder Fehlerort am nächsten liegenden Komponenten, abgeschaltet werden, während andere, insbesondere für die Manövrierfähigkeit des Schiffes wichtige, Komponenten weiter eingeschaltet und somit in Funktion bleiben können. Insgesamt kann somit die Verfügbarkeit und die Ausfallsicherheit der Schiffs-Energieversorgungs- und Verteilungsanlage und damit des ganzen Schiffes im Kurzschlussfall erhöht werden.

Die Zeitverzögerung in der Überstromauslösung erfolgt hierbei durch die in den Leistungsschaltern angeordneten Überstromauslöser selbst. Es sind keine zusätzlich in das Schiff einzubauenden Komponenten notwendig. Die Verfügbarkeit und Ausfallsicherheit der Schiffs-Energieversorgungs- und Verteilungsanlage kann somit mit geringem Aufwand und Platzbedarf erhöht werden.

Die Verfügbarkeit und Ausfallsicherheit der Anlage kann dadurch noch zusätzlich erhöht werden, dass zumindest einer der Leistungsschalter mit unverzögerten Überstromauslösern Einstellmittel zur Einstellung des Auslösestroms aufweist. Mit Hilfe dieser Einstellmittel kann der Auslösestrom des Überstromauslösers an die in der Anlage auftretenden Betriebsströme und betriebsbedingten Überströme angepasst werden. Es kann somit ein ungewünschtes Auslösen des Überstromauslösers bei Betriebsströmen und betriebsbedingten Überströmen vermieden, ein Auslösen des Überstromauslösers und somit ein Abschalten des Leistungsschalters bei Kurzschlusströmen jedoch gewährleistet werden.

Eine weitere Erhöhung der Verfügbarkeit der Anlage ist dadurch möglich, dass zumindest einer der Leistungsschalter mit verzögerten Überstromauslösern Einstellmittel zur Einstellung des Auslösestroms und der Verzögerungszeit aufweist. Dies ermöglicht eine individuelle Einstellung des Auslösestroms und der Zeitverzögerung des Überstromauslösers des Leistungsschalters und somit eine Optimierung der Zeitstaffelung für das selektive Abschalten von Teilen der Anlage im Kurzschlussfall. Gleichzeitig kann ein Abschalten des Leistungsschalters bei Betriebsströmen und betriebsbedingten Überströmen vermieden werden.

Zur Optimierung der Zeitstaffelung bzw. Auslöseselektivität und somit der Verfügbarkeit der Anlage ist in einer besonders vorteilhaften Ausgestaltung der Erfindung eine Abhängigkeit der jeweiligen Verzögerungszeiten der zeitverzögerten Überstromauslöser von der elektrischen Anordnung des zugehörigen Leistungsschalters in der Anlage vorgesehen.

Ein selektives Abschalten von Komponenten oder Teilen der Anlage bei gleichzeitiger Vermeidung einer zu hohen Belastung der Anlage im Kurzschlussfall kann dadurch erreicht werden, dass die Verzögerungszeiten der Überstromauslöser 100 bis 500 ms, insbesondere 150 oder 300 oder 450 ms betragen. Somit kann gewährleistet werden, dass ein erster Schalter mit einem unverzögerten Überstromauslöser oder mit einem zeitverzögerten Überstromauslöser mit nur geringer Zeitverzögerung genug Zeit für eine Löschung des bei Schalteröffnung entstehenden Lichtbogens hat bevor ein zweiter Schalter durch einen Überstromauslöser mit (grösserer) Zeitverzögung zum Abschalten gebracht wird.

Um eine von der Höhe des Kurzschlussstroms unabhängige Zeitstaffelung bzw. Auslöseselektivität zu gewährleisten, erfolgt die Zeitverzögerung eines jeweiligen Überstromauslösers vorteilhafterweise unabhängig von der Höhe des durch ihn fließenden Stroms.

Die Erfindung sowie weitere vorteilhafte Ausgestaltungen der Erfindung gemäß Merkmalen der Unteransprüche werden im Folgenden anhand von Ausführungsbeispielen in den Figuren näher erläutert; darin zeigen:
- FIG 1: eine Prinzipschaltung einer Schiffs-Energieversorgungsund -verteilungsanlage eines Unterwasserschiffes in vereinfachter Darstellung,
- FIG 2: eine perspektivische Ansicht eines zweipoligen Leistungsschalters mit unverzögerten Überstromauslösern,
- FIG 3: eine Frontansicht des Leistungsschalters von FIG 2,
- FIG 4: eine Frontansicht eines zweipoligen Leistungsschalters mit zeitverzögerten Überstromauslösern,
- FIG 5: einen unverzögerten Überstromauslöser,
- FIG 6: einen zeitverzögerten Überstromauslöser,
- FIG 7: einen Back-up-Schutz durch zeitverzögerte Überstromauslöser in Leistungsschaltern einer Batterieschalteinrichtung.

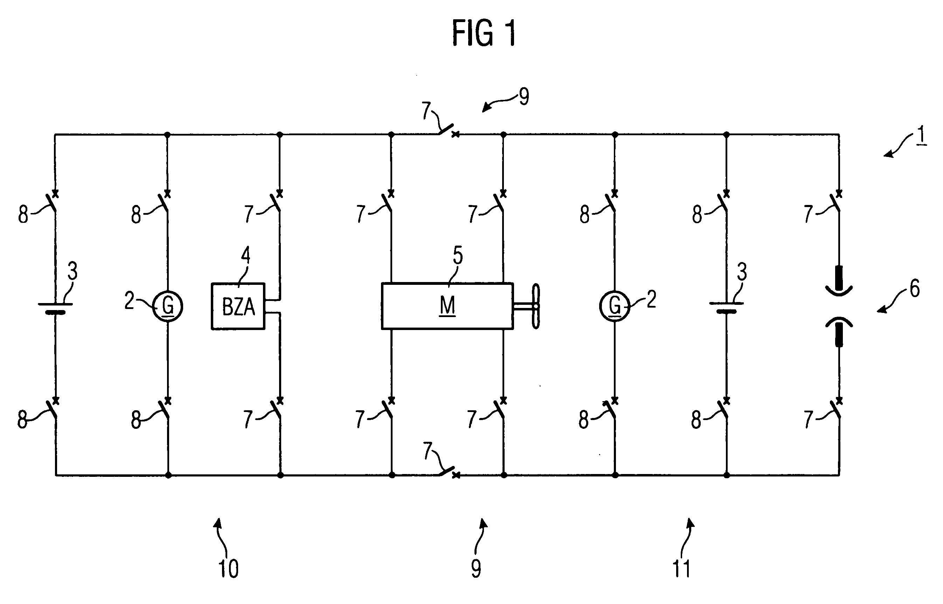

Eine in FIG 1 gezeigte Schiffs-Energieversorgungs- und - verteilungsanlage 1 eines Unterwasserschiffes weist ein erstes Teilnetz 10 und ein zweites Teilnetz 11 auf, die über Kupplungsstellen 9 miteinander verbunden sind. Die beiden Teilnetze 10, 11 weisen zur Energieerzeugung Generatoren 2 und Batterien 3 sowie eine Brennstoffzellenanlage 4 auf. Die erzeugte Energie wird zur Speisung eines Motors 5 (z.B. DC-Motor oder DC-gespeister Motor) zum Antrieb des Unterwasserschiffes sowie eines nicht näher dargestellten Bordnetzes verwendet. Über einen Ladeanschluss 6 ist eine Batterieladung durch eine externe Energiequelle möglich. Der Motor 5 wird hierbei von beiden Teilnetzen 10,11 gespeist, so dass der Betrieb des Motors 5 und damit die Manövrierfahigkeit des Schiffes auch bei Ausfall eines der beiden Teilnetze 10,11 gewährleistet ist.

Zwischen die einzelnen Komponenten sind als Schutz- und Schaltorgane sowohl Leistungsschalter 7 mit unverzögerten Überstromauslösern als auch Leistungsschalter 8 mit zeitverzögerten Überstromauslösern geschaltet.

An den Kupplungsstellen 9 sind vorteilhafterweise Leistungsschalter 7 mit unverzögerten Überstromauslösern als Schutzund Schaltorgane vorgesehen. Im Fall eines Kurzschlusses in einem der beiden Teilnetze 10,11, der einen hohen Kurzschlusstrom von den Energieerzeugern des fehlerfreien Teilnetzes über die Kupplungsstellen 9 zu dem kurzschlußbehafteten Teilnetz zur Folge hat, erfolgt somit eine unverzögerte und damit schnellstmögliche Abschaltung der an den Kupplungsstellen 9 angeordneten Leistungsschalter 7 und somit eine Trennung des kurzschlußbehafteten Teilnetzes vom kurzschlußfreien Teilnetz.

Bevorzugt sind Leistungsschalter 8 mit zeitverzögerten Überstromauslösern als Schutz- und Schaltorgan für mindestens einen der Energieerzeuger vorgesehen. Im Fall der Anlage 1 sind deshalb für die als Energieerzeuger vorgesehenen Generatoren 2 und Batterien 3 Leistungsschalter 8 mit zeitverzögerten Überstromauslösern als Schutz- und Schaltorgane vorgesehen. Im Kurzschlussfall werden diese Energieerzeuger somit erst mit Verzögerung abgeschaltet. Aufgrund dieser Verzögerung kann z.B. eine vorstehend geschilderte Trennung eines kurzschlußbehafteten Teilnetzes von einem kurzschlußfreien Teilnetz erfolgen, bevor der verzögerte Überstromauslöser anspricht, so dass im Ergebnis eine Abschaltung des dem Energieerzeuger vorgeschalteten Leistungsschalters und somit eine Trennung des Energieerzeugers von der Anlage 1 vermieden wird. Der Betrieb der Generatoren 2 und der Batterien 3 in dem fehlerfreien Teilnetzes und somit die Verfügbarkeit dieses Teilnetzes kann somit trotz eines Kurzschlusses in dem fehlerbehafteten Teilnetz ohne wesentliche Beinträchtigungen aufrechterhalten werden.

Da die Brennstoffzellenanlage 4 mit einer elektronischen Strombegrenzungseinrichtung ausgerüstet ist, die zu einer besonders schnellen Abschaltung der Brennstoffzellenanlage im Kurzschlussfall führt, können als Schutz- und Schaltorgane für die Brennstoffzellenanlage Leistungsschalter 7 mit unverzögerten Überstromauslösern vorgesehen werden.

Weiterhin sind bevorzugt Leistungsschalter 7 mit unverzögerten Überstromauslösern als Schutz- und Schaltorgane für mindestens einen der Energieverbraucher vorgesehen. Im Fall der Anlage 1 weist der Motor 5 als Schutz- und Schaltorgane Leistungsschalter mit unverzögerten Überstromauslösern auf. Diese bewirken selektiv eine Trennung des Motors 5 von der Anlage 1 im Fall eines Kurzschlusses, wobei diese Trennung zeitlich vor einem Ansprechen der zeitverzögerten Überstromauslöser der den Batterien 2 und Generatoren 3 zugeordneten Leistungsschalter 8 mit zeitverzögerten Überstromauslösern erfolgt, so dass auch in diesem Fall eine Trennung der Energieerzeuger von der Anlage 1 vermieden und damit die Verfügbarkeit von Energie für die nicht kurzschlussbehafteten Energieverbraucher gewährleistet wird.

Weiterhin ist auch der Ladeanschluss 6 durch Leistungsschalter 7 mit unverzögerten Überstromauslösern abgesichert, die selektiv eine schnellstmögliche Trennung des Ladeanschlusses 6 von der Anlage 1 im Fall eines Kurzschlusses bewirken.

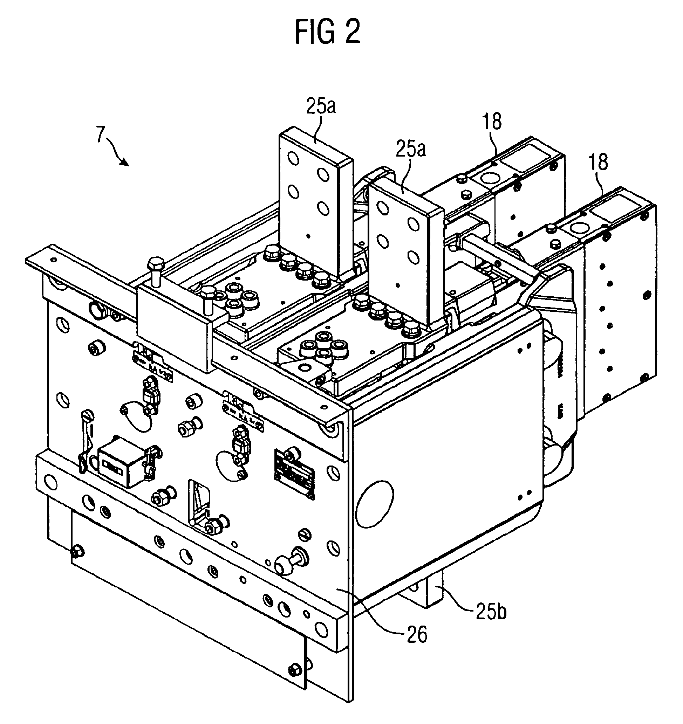

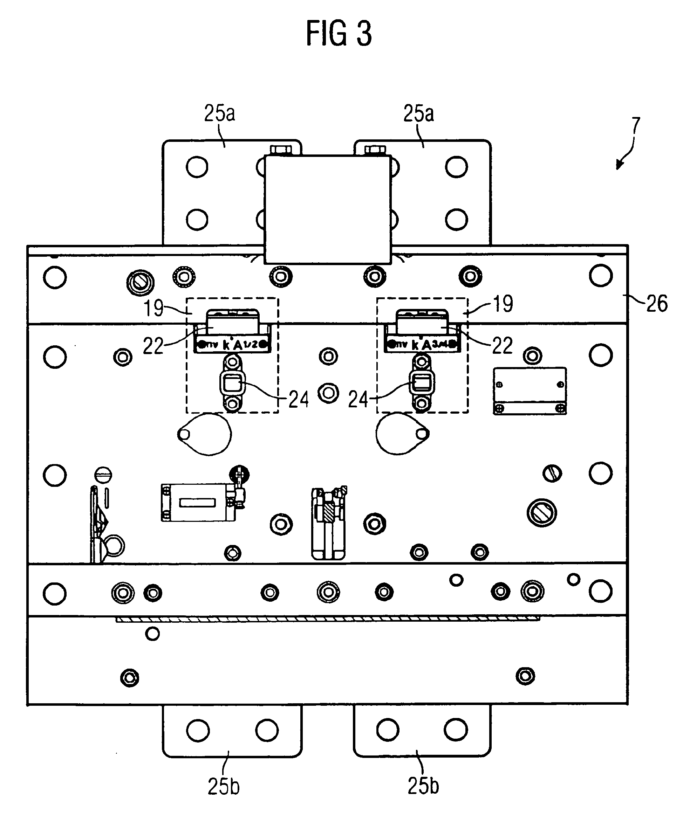

Die FIG 2 zeigt eine perspektivischer Ansicht und die FIG 3 eine Frontansicht eines beispielsweise in der Schiffs-Energieversorgungs- und Verteilungsanlage von FIG 1 einsetzbaren zweipoligen Leistungsschalters 7 mit unverzögerten Überstromauslösern 19. Die Überstromauslöser 19 sind hinter einer Frontplatte 26 des Leistungsschalters 7 angeordnet und deshalb in FIG 3 nur strichliert angedeutet. Der Leistungsschalter 7 ist als ein selbsttragender Aufbauschalter ausgebildet und mit jeweils einem Anschlusstück 25a und 25b und einer Lichtbogenkammer 18 für jeden der beiden Pole ausgeführt, wobei vorteilhafterweise für jeden einzelnen Pol des Leistungsschalters 7 jeweils ein Überstromauslöser 19 vorgesehen ist. Die einzelnen Pole des Leistungsschalters 7 können somit in unterschiedliche Stromkreise geschaltet werden. Bei Ansprechen eines der beiden Überstromauslöser wird der gesamte Leistungsschalter 7, d.h. beide Pole gleichzeitig, abgeschaltet. Vorteilhafterweise sind die einzelnen Pole mit ihren Lichtbogenkammern hierbei jeweils auf einen Doppelerdschluss in der Schiffs-Energieversorgungs- und Verteilungsanlage ausgelegt, so dass ein Doppelerdschluss in der Anlage 1 sicher abgeschaltet und somit die Sicherheit der Anlage 1 insgesamt erhöht werden kann.

Der Leistungsschalter 7 weist zur Einstellung des Auslösestroms für jeden der Überstromauslösers 19 jeweils ein auf bzw. in der Frontplatte des Leistungsschalters 7 angeordnetes Einstellmittel 22 für den Auslösestrom auf. Die Einstellmittel 22 sind hierbei jeweils als Einstelltrommel ausgebildet. Durch eine Drehung der Einstelltrommel ist eine nahezu stufenlose, gezielte und präzise Einstellung des Auslösestroms auch unter beengten Raumverhältnissen wie z.B. an Bord eines Unterwasserschiffes möglich.

Um ein (fehlerbedingtes) Wiedereinschalten des Leistungsschalters 7 nach einer Überstromauslösung zu verhindern, weist der Leistungsschalter 7 für jeden Überstromauslöser 19 bevorzugt eine nicht näher dargestellte Verriegelung gegen Wiedereinschalten nach Überstromauslösung auf. Die Verriegelung ist über ein ebenfalls auf bzw. in der Frontplatte 26 des Leistungsschalters 18 angeordnetes, als Druckknopf ausgebildetes, Entriegelungselement 24 entriegelbar.

Die Einstellmittel 22 sowie die Entriegelungselemente 24 sind für das Bedienpersonal direkt auf der Frontseite des Leistungsschalters 7 zugänglich und betätigbar und können im eingebauten Zustand (z.B. in einem Schalttafelgerüst) des Leistungschalters 7 bedient werden. Ein Öffnen des Leistungsschalter 7 oder eine Demontage aus dessen Einbauort ist für die Bedienung der Einstellmittel 22 sowie der Entriegelungselemente 24 nicht notwendig.

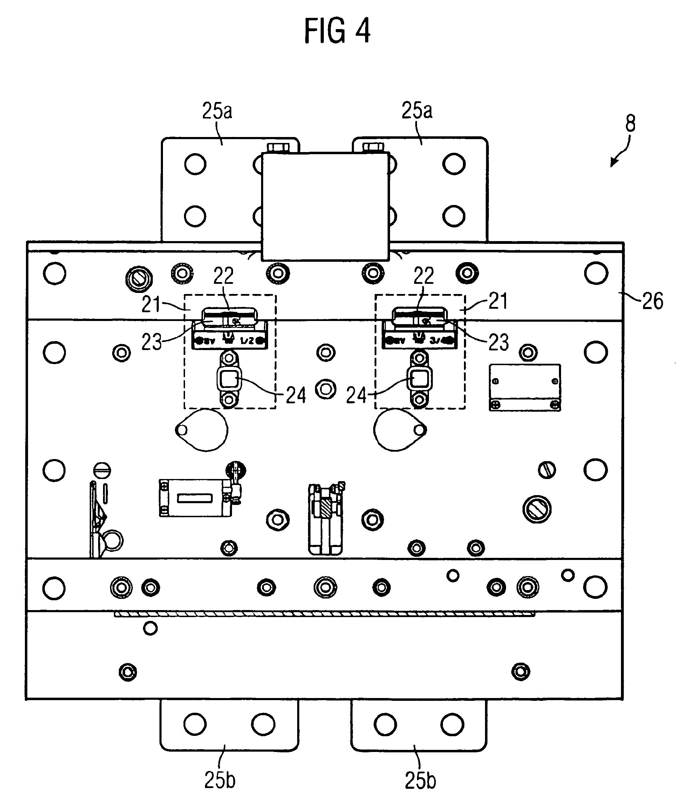

Die FIG 4 zeigt eine Frontansicht eines zweipoligen Leistungsschalters 8 mit zeitverzögerten Überstromauslösern 21. Der Leistungsschalter 8 ist prinzipiell ähnlich wie der in FIG 2 und 3 dargestellte Leistungsschalter 7 aufgebaut. Einander entsprechende Teile haben deshalb das gleiche Bezugszeichen wie im Fall des in FIG2 und 3 gezeigten Leistungsschalters 7. Die Überstromauslöser 21 sind wiederum hinter einer Frontplatte 26 des Leistungsschalters 8 angeordnet und deshalb nur strichliert angedeutet. Jedem der zwei Pole des Leistungsschalters 8 ist jeweils ein zeitverzögerter Überstromauslöser 21 zugeordnet. Jedem der Überstromauslöser 21 ist ein als Einstelltrommel ausgebildetes Einstellmittel 22 zur Einstellung des jeweiligen Auslösestromes zugeordnet. Zusätzlich ist jedem Überstromauslöser 21 ein ebenfalls als Einstelltrommel ausgebildetes Einstellmittel 23 zur Einstellung der Zeitverzögerung des Überstromauslösers 21 zugeordnet.

Auch der Leistungsschalter 8 weist bevorzugt eine nicht näher dargestellte Verriegelung gegen (fehlerbedingtes) Wiedereinschalten nach einer Überstromauslösung auf, zu deren Entriegelung für jeden Überstromauslöser ein in bzw. auf der Frontplatte 26 des Leistungsschalters 18 angeordnetes Entriegelungselement 24 vorgesehen ist. Die Einstellmittel 22 und 23 sowie das Entriegelungselement 24 sind, wie bereits im Zusammenhang mit FIG 3 erläutert, bedienungsfreundlich von der Frontseite des Leistungsschalters 8 zugänglich.

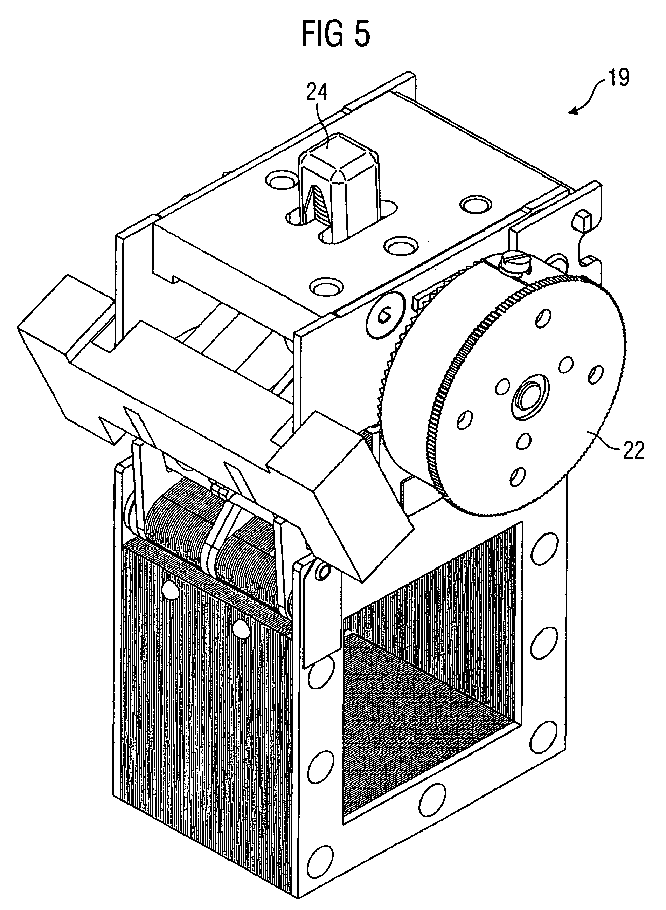

Die FIG 5 zeigt eine genauere Ansicht des unverzögerten Überstromauslösers 19 des in FIG 2 und 3 dargestellten Leistungsschalters mit dem als Einstelltrommel ausgebildeten Einstellmittel 22 für den Auslösestrom und dem Entriegelungselement 24.

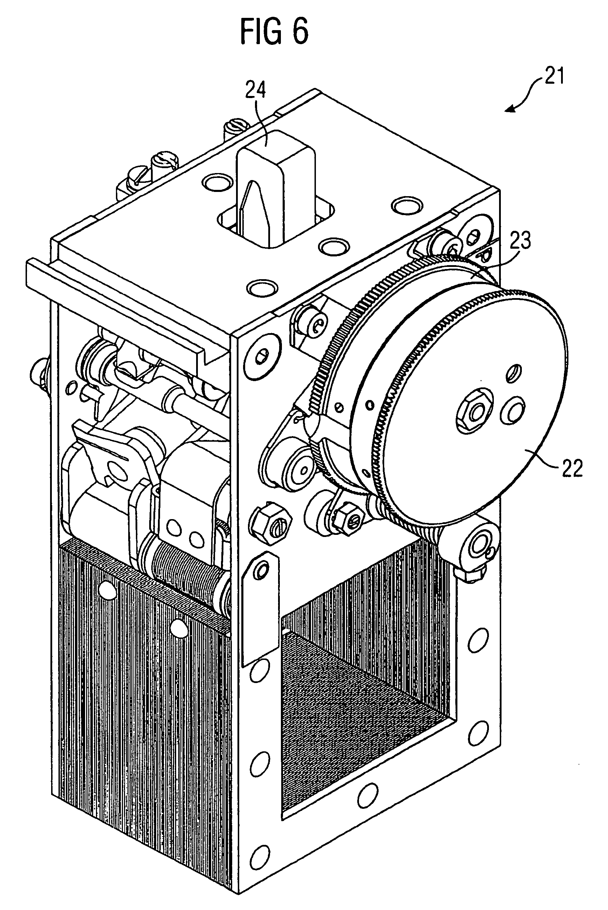

Eine genauere Ansicht des zeitverzögerten Überstromauslösers 21 des in FIG 4 dargestellten Leistungsschalters 8 zeigt die FIG 6. Der Überstromauslöser 21 weist neben dem als Einstelltrommel ausgebildeten Einstellmittel 22 für den Auslösestrom und dem Entriegelungselement 24 noch das ebenfalls als Einstelltrommel ausgebildete Einstellmittel 23 für die Zeitverzögerung des Überstromauslösers 21 auf. Die Einstelltrommeln für Auslösestrom und Zeitverzögerung des Überstromauslösers 21 weisen hierbei im wesentlichen gleichen Durchmesser auf und sind konzentrisch übereinander angeordnet.

Eine erhöhte Ausfallsicherheit kann noch dadurch erzielt werden, dass die Überstromauslöser der Leistungsschalter 7 und 8 fremdspannungsunabhängig arbeiten. Vorzugsweise werden deshalb elektromechanische Überstromauslöser als Überstromauslöser verwendet. Bevorzugt weist der elektromechanische Überstromauslöser zur zeitverzögerten Auslösung ein (nicht näher dargestelltes) mechanisches Hemmwerk auf, da dieses eine zuverlässige, fremdspanungsunabhängige Zeitverzögerung ermöglicht.

Ein Back-Up-Schutz für ein einem Energieerzeuger nachgeschaltetes Schutzorgan, z.B. für einen Leistungsschalter und/oder eine Sicherung, lässt sich dadurch erreichen, dass ein Leistungsschalter mit einem zeitverzögerten Überstromauslöser elektrisch zwischen das nachgeschaltete Schutzorgan und den Energieerzeuger geschaltet ist, wobei der zeitverzögerte Überstromauslöser eine größere Zeitverzögerung in der Überstromauslösung als das nachgeschaltete Schutzorgan aufweist. Bevorzugt weist das nachgeschaltete Schutzorgan eine unverzögerte Überstromauslösung auf.

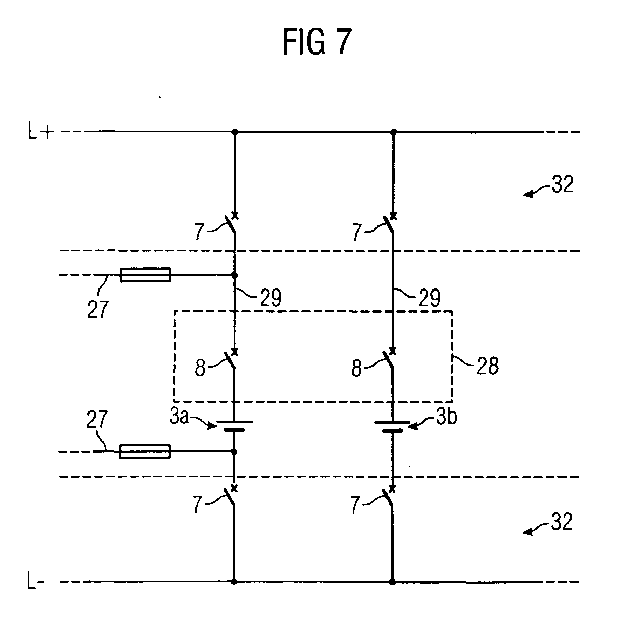

FIG 7 zeigt hierzu beispielhaft einen Back-Up-Schutz für Schutzorgane, die den Batterien eines Unterwasserschiffes nachgeschaltet sind. Die Batterien 3a und 3b speisen über in einer Haupt- oder Fahrschalttafel 32 des Schiffes angeordnete (L+)- und (L-)-Schienen verschiedene Energieverbraucher, z.B. die Fahrmotoren, des Unterwasserschiffes. Als Schutz- und Schaltorgane sind den Batterien 3a und 3b Leistungsschalter 7 mit unverzögerten Überstromauslösern nachgeschaltet. Diese Leistungsschalter 7 sind in der Haupt- oder Fahrschalttafel 32 angeordnet.

Eine Batterieschalteinrichtung 28 ist in der Nähe der Batterien angeordnet und elektrisch zwischen den Pluspol der Batterie und die (L+)-Schiene der Haupt- oder Fahrschalttafel 32 geschaltet. Die Batterieschalteinrichtung 28 weist Leistungsschalter 8 mit zeitverzögerten Überstromauslösern auf.

Im Fall der Batterie 3a ist im Strompfad zwischen der Batterieschalteinrichtung 28 und der Haupt- oder Fahrschalttafel 32 bzw. dem Minuspol der Batterie und der Haupt- oder Fahrschalttafel 32 jeweils ein Abzweig 27 zur Energieversorgung des Bordnetzes des Unterwasserschiffes vorgesehen.

Kurzschlüsse nach den Leistungsschaltern 7 der Haupt- oder Fahrschalttafel 32, und somit insbesondere batterieferne Kurzschlüsse, z.B. Kurzschlüsse an den durch die Batterien 3a,3b gespeisten Verbrauchern, werden selektiv durch die unverzögert auslösenden Leistungsschalter 7 der Haupt- oder Fahrschalttafel 32 abgeschaltet, da diese abschalten bevor eine Auslösung der zeitverzögert auslösenden Überstromauslöser der Leistungsschalter 8 der Batterieschalteinrichtung 28 erfolgt. Es kann somit eine Abschaltung der Leistungsschalter 8 vermieden und die Energieversorgung des Bordnetzes über die Abzweige 27 aufrechterhalten werden.

Im Fall eines Versagens eines oder mehrerer der Leistungsschalter 7 oder eines Kurzschlusses auf der Verbindungsleitung 29 zwischen der in räumlicher Nähe der Batterien 3a,3b angeordneten Batterieschalteinrichtung 28 und der Haupt- oder Fahrschalttafel 32 kommt es zu einem Auslösen der zeitverzögert auslösenden Überstromauslöser der Leistungsschalter 8. Mit Hilfe der Leistungsschalter 8 der Batterieschalteinrichtung 28 ist somit ein zusätzlicher Kurzschlusschutz im Sinne eines Back-Up-Schutzes gegeben.

## Patentansprüche

1. Schiffs-Energieversorgungs- und -verteilungsanlage (1), insbesondere für Unterwasserschiffe, mit
- Energieerzeugern, z.B. Generatoren (2), Batterien (3), ggf. eine Brennstoffzellenanlage (4),
- Energieverbrauchern, z.B. Fahrmotoren (5), Bordnetz zur Speisung von Hilfsantrieben,
die miteinander elektrisch verbunden sind, wobei zumindest einem Teil der Komponenten Schutz- und Schaltorgane zwischengeschaltet sind,
als Schutz- und Schaltorgane sowohl Leistungsschalter (7) mit unverzögerten Überstromauslösern (19) als auch Leistungsschalter (8) mit zeitverzögerten Überstromauslösern (21) vorgesehen sind, **dadurch gekennzeichnet, dass** Leistungsschalter (7) mit unverzögerten Überstromauslösern (19) als Schutz- und Schaltorgane an Kupplungsstellen (9) von Teilnetzen (10,11) der Anlage vorgesehen sind.

2. Schiffs-Energieversorgungs- und -verteilungsanlage (1) nach Anspruch 1,
**dadurch gekennzeichnet, dass** zumindest einer der Leistungsschalter (7) mit einem unverzögerten Überstromauslöser (19) Einstellmittel (22) zur Einstellung des Auslösestroms aufweist.

3. Schiffs-Energieversorgungs- und -verteilungsanlage (1) nach Anspruch 1,
**dadurch gekennzeichnet, dass** zumindest einer der Leistungsschalter (8) mit einem zeitverzögerten Überstromauslöser (21) Einstellmittel (22) zur Einstellung des Auslösestroms und Einstellmittel (23) zur Einstellung der Verzögerungszeit aufweist.

4. Schiffs-Energieversorgungs- und -verteilungsanlage (1) nach einem der vorhergehenden Ansprüche,
**gekennzeichnet durch** eine Abhängigkeit der jeweiligen Verzögerungszeiten der zeitverzögerten Überstromauslöser (21) von der elektrischen Anordnung der zugehörigen Leistungsschalter (8) in der Anlage (1).

5. Schiffs-Energieversorgungs- und -verteilungsanlage (1) nach Anspruch 4,
**dadurch gekennzeichnet, dass** die Verzögerungszeiten 100 bis 500 ms, insbesondere 150 oder 300 oder 450 ms, betragen.

6. Schiffs-Energieversorgungs- und -verteilungsanlage (1) nach einem der vorhergehenden Ansprüche,
**dadurch gekennzeichnet, dass** die zeitverzögerung eines jeweiligen zeitverzögerten Überstromauslösers (21) unabhängig von der Höhe des durch ihn fließenden Stroms erfolgt.

7. Schiffs-Energieversorgungs- und -verteilungsanlage (1) nach einem der vorhergehenden Ansprüche,
**dadurch gekennzeichnet, dass** Leistungsschalter (8) mit zeitverzögerten Überstromauslösern (21) als Schutz- und Schaltorgane für mindestens einen der Energieerzeuger vorgesehen sind.

8. Schiffs-Energieversorgungs- und -verteilungsanlage (1) nach einem der vorhergehenden Ansprüche,
**dadurch gekennzeichnet, dass** Leistungsschalter (7) mit unverzögerten Überstromauslösern (21) als Schutz- und Schaltorgane für mindestens einen der Energieverbraucher vorgesehen sind.

9. Schiffs-Energieversorgungs- und -verteilungsanlage (1) nach einem der vorhergehenden Ansprüche,
**dadurch gekennzeichnet, dass** ein Leistungsschalter (8) mit zeitverzögertem Überstromauslöser (21) elektrisch zwischen einen Energieerzeuger, insbesondere eine Batterie, und ein dem Energieerzeuger nachgeschaltetes Schutzorgan geschaltet ist, wobei der zeitverzögerte Überstromauslöser (21) eine größere Zeitverzögerung in der Überstromauslösung als das nachgeschaltete Schutzorgan aufweist.

10. Schiffs-Energieversorgungs- und -verteilungsanlage (1) nach Anspruch 9,
**dadurch gekennzeichnet, dass** ein Abzweig für eine Bordnetzeinspeisung zwischen dem Leistungsschalter (8) mit zeitverzögertem Überstromauslöser (21) und dem nachgeschalteten Schutzorgan vorgesehen ist.

11. Schiffs-Energieversorgungs- und -verteilungsanlage (1) nach Anspruch 9 oder 10,
**dadurch gekennzeichnet, dass** das nachgeschaltete Schutzorgan eine unverzögerte Überstromauslösung aufweist.

12. Schiffs-Energieversorgungs- und -verteilungsanlage (1) nach einem der vorhergehenden Ansprüche,
**dadurch gekennzeichnet, dass** für jeden einzelnen Pol der Leistungsschalter (7,8) jeweils ein Überstromauslöser (19,21) vorgesehen ist.

13. Schiffs-Energieversorgungs- und -verteilungsanlage (1) nach einem der vorhergehenden Ansprüche,
**dadurch gekennzeichnet, dass** die Überstromauslöser (19,21) fremdspannungsunabhängig arbeiten.

14. Schiffs-Energieversorgungs- und -verteilungsanlage (1) nach Anspruch 12,
**dadurch gekennzeichnet, dass** elektromechanische Überstromauslöser verwendet werden.

15. Schiffs-Energieversorgungs- und -verteilungsanlage nach Anspruch 14,
**dadurch gekennzeichnet, dass** die elektromechanischen Überstromauslöser ein mechanisches Hemmwerk zur zeitverzögerten Auslösung aufweisen.

16. Schiffs-Energieversorgungs- und -verteilungsanlage nach einem der vorhergehenden Ansprüche,
**dadurch gekennzeichnet, dass** zumindest einer der Leistungsschalter (7,8) eine Verriegelung gegen Wiedereinschalten nach Überstromauslösung aufweist.

## Claims

1. Power supply and distribution system for a ship (1), especially for submarines, with
- energy generators, e.g. generators (2), batteries (3), where necessary a fuel cell system (4),
- energy consumers, e.g. drive motors (5), on-board network for feeding auxiliary drives,
which are connected to one another electrically, wherein protection and switching elements are connected between at least some of the components,
both circuit breakers (7) with instantaneous overcurrent releases (19) and also circuit breakers (8) with time-delayed overcurrent releases (21) are provided as protection and switching elements, **characterised in that** circuit breakers (7) with instantaneous overcurrent releases (19) are provided as protection and switching elements at coupling points (9) of subnetworks (10, 11) of the system.

2. Power supply and distribution system for a ship (1) according to claim 1,
**characterised in that** at least one of the circuit breakers (7) with an instantaneous overcurrent release (19) has means (22) for setting the release current.

3. Power supply and distribution system for a ship (1) according to claim 1,
**characterised in that** at least one of the circuit breakers (8) with a time-delayed overcurrent release (21) has means (22) for setting the release current and means (23) for setting the delay time.

4. Power supply and distribution system for a ship (1) according to one of the preceding claims,
**characterised by** a dependency of the respective delay times of the time-delayed overcurrent release (21) on the electrical arrangement of the respective circuit breaker (8) in the system (1).

5. Power supply and distribution system for a ship (1) according to claim 4,
**characterised in that** the delay times amount to 100 to 500 ms, especially 150 or 300 or 450 ms.

6. Power supply and distribution system for a ship (1) according to one of the preceding claims,
**characterised in that** the time delay of a respective time-delayed overcurrent release (21) is independent of the level of the current flowing through it.

7. Power supply and distribution system for a ship (1) according to one of the preceding claims,
**characterised in that** circuit breakers (8) with time-delayed overcurrent releases (21) are provided as protection and switching elements for at least one of the energy generators.

8. Power supply and distribution system for a ship (1) according to one of the preceding claims,
**characterised in that** circuit breakers (7) with immediate overcurrent releases (21) are provided as protection and switching elements for at least one of the energy consumers.

9. Power supply and distribution system for a ship (1) according to one of the preceding claims,
**characterised in that** a circuit breaker (8) with time-delayed overcurrent release (21) is connected electrically between an energy generator, especially a battery, and a protective element connected downstream from the energy generator, with the time delayed overcurrent release (21) having a greater time delay in its overcurrent release than the downstream protective element.

10. Power supply and distribution system for a ship (1) according to claim 9,
**characterised in that** a branch is provided for an onboard network feed between the circuit breaker (8) with time-delayed overcurrent release (21) and the downstream protective element.

11. Power supply and distribution system for a ship (1) according to claim 9 or 10,
**characterised in that** the downstream protective element has an instantaneous overcurrent release.

12. Power supply and distribution system for a ship (1) according to one of the preceding claims,
**characterised in that** an overcurrent release (19, 21) is provided in each case for each individual pole of the circuit breaker (7, 8).

13. Power supply and distribution system for a ship (1) according to one of the preceding claims,
**characterised in that** the overcurrent releases (19, 21) operate independently of foreign voltage.

14. Power supply and distribution system for a ship (1) according to claim 12,
**characterised in that** electromechanical overcurrent releases are used.

15. Power supply and distribution system for a ship (1) according to claim 14,
**characterised in that** the electromechanical overcurrent releases have a mechanical restriction device for time-delayed release.

16. Power supply and distribution system for a ship (1) according to one of the preceding claims,
**characterised in that** at least one of the circuit breakers (7, 8) has a lock to prevent it being switched back on after overcurrent release.

## Revendications

1. Installation ( 1 ) d'alimentation et de distribution d'électricité pour un bateau, notamment pour des sous-marins, comprenant
- des producteurs d'électricité, par exemple des génératrices ( 2 ), des batteries ( 3 ), le cas échéant une installation ( 4 ) de piles à combustible,
- des consommateurs d'électricité, par exemple des moteurs de traction, un réseau de bord pour l'alimentation d'entraînements auxiliaires,
qui sont reliés électriquement entre eux, des organes de protection et de commutation étant intercalés,
tant des disjoncteurs ( 7 ) à déclencheurs ( 19 ) de surintensité non retardés qu'également ( 8 ) à déclencheurs ( 21 ) de surintensité retardés dans le temps étant prévus comme organe de protection et de commutation, **caractérisé en ce qu'**il est prévu des disjoncteurs ( 7 ) à déclencheurs ( 19 ) de surintensité non retardés comme organe de protection et de commutation en des points ( 9 ) de couplage de sous-réseaux ( 10, 11 ) de l'installation.

2. Installation ( 1 ) d'alimentation et de distribution d'électricité pour un bateau suivant la revendication 1, **caractérisée en ce qu'**au moins l'un des disjoncteurs ( 7 ) ayant un déclencheur ( 19 ) de surintensité non retardé comporte des moyens ( 22 ) de réglage du courant de déclenchement.

3. Installation ( 1 ) d'alimentation et de distribution d'électricité pour un bateau suivant la revendication 1, **caractérisée en ce qu'**au moins l'un des disjoncteurs ( 8 ) ayant un déclencheur ( 21 ) de surintensité retardé dans le temps comprend des moyens ( 22 ) de réglage du courant de déclenchement et des moyens ( 23 ) de réglage de la durée de retard.

4. Installation ( 1 ) d'alimentation et de distribution d'électricité pour un bateau suivant l'une des revendications précédentes, **caractérisée par** une dépendance des temps de retard respectifs des déclencheurs ( 21 ) de surintensité retardés dans le temps à l'agencement électrique des disjoncteurs ( 8 ) associés dans l'installation ( 1 ).

5. Installation ( 1 ) d'alimentation et de distribution d'électricité pour un bateau suivant la revendication 4, **caractérisée en ce que** les temps de retard vont de 100 à 500 ms, en étant notamment de 150 ou 300 ou 450 ms.

6. Installation ( 1 ) d'alimentation et de distribution d'électricité pour un bateau suivant l'une des revendications précédentes, **caractérisée en ce que** le retard dans le temps d'un déclencheur ( 21 ) de surintensité retardé dans le temps est indépendant de l'intensité du courant qui y passe.

7. Installation ( 1 ) d'alimentation et de distribution d'électricité pour un bateau suivant l'une des revendications précédentes, **caractérisée en ce qu'**il est prévu des disjoncteurs ( 8 ) à déclencheurs ( 21 ) de surintensité retardés dans le temps comme organes de protection et de commutation pour au moins l'un des producteurs d'électricité.

8. Installation ( 1 ) d'alimentation et de distribution d'électricité pour un bateau suivant l'une des revendications précédentes, **caractérisée en ce qu'**il est prévu des disjoncteurs ( 7 ) à déclencheurs ( 21 ) de surintensité non retardés comme organes de protection de commutation pour au moins l'un des consommateurs d'électricité.

9. Installation ( 1 ) d'alimentation et de distribution d'électricité pour un bateau suivant l'une des revendications précédentes, **caractérisée en ce qu'**il est monté un disjoncteur ( 8 ) à déclencheur ( 8 ) de surintensité retardé dans le temps électriquement entre un producteur d'électricité, notamment une batterie, et un organe de protection monté en aval du conducteur d'électricité, le déclencheur ( 21 ) de surintensité retardé dans le temps ayant un retard dans le temps plus grand dans le déclenchement de la surintensité que l'organe de protection en aval.

10. Installation ( 1 ) d'alimentation et de distribution d'électricité pour un bateau suivant la revendication 9, **caractérisée en ce qu'**il est prévu une dérivation pour une alimentation d'un réseau de bord entre les disjoncteurs ( 8 ) ayant un déclencheur ( 21 ) de surintensité retardé dans le temps et l'organe de protection en aval.

11. Installation ( 1 ) d'alimentation et de distribution d'électricité pour un bateau suivant la revendication 9 ou 10, **caractérisée en ce que** l'organe de protection en aval a un déclenchement de surintensité non retardé.

12. Installation ( 1 ) d'alimentation et de distribution d'électricité pour un bateau suivant l'une des revendications précédentes, **caractérisée en ce qu'**un déclencheur ( 19, 21 ) de surintensité est prévu respectivement pour chaque pôle individuel du disjoncteur ( 7, 8 ).

13. Installation ( 1 ) d'alimentation et de distribution d'électricité pour un bateau suivant l'une des revendications précédentes, **caractérisée en ce que** les déclencheurs ( 19, 21 ) de surintensité opèrent indépendamment d'une tension extérieure.

14. Installation ( 1 ) d'alimentation et de distribution d'électricité pour un bateau suivant la revendication 12, **caractérisée en ce que** l'on utilise des déclencheurs de surintensité électromécaniques.

15. Installation ( 1 ) d'alimentation et de distribution d'électricité pour un bateau suivant la revendication 14, **caractérisée en ce que** les déclencheurs de surintensité électromécaniques ont un dispositif de blocage du déclenchement retardé dans le temps.

16. Installation ( 1 ) d'alimentation et de distribution d'électricité pour un bateau suivant l'une des revendications précédentes, **caractérisée en ce qu'**au moins l'un des disjoncteurs ( 7, 8 ) comporte un verrouillage l'empêchant d'être rebranché après déclenchement par surintensité.
